# EUROPEAN PATENT APPLICATION

(11) **EP 4 659 941 A1**
(43) Date of publication of application: **10.12.2025**
(21) Application number: 23919705.6
(22) Date of filing: 01.02.2023
(51) Int. Cl.: B29C 70/32, B29D 23/00, F16C 3/02

(54) **FIBER-REINFORCED RESIN CYLINDER, MANUFACTURING METHOD FOR FIBER-REINFORCED RESIN CYLINDER, AND FIBER-REINFORCED RESIN CYLINDER MANUFACTURING JIG**

(71) Applicant: Astemo, Ltd., Tokyo 100-0004 (JP)
(72) Inventor: NAKAYAMA, Takahiro, Hitachinaka-shi Ibaraki 312-8503 (JP); YOKOYAMA, Kazuhisa, Hitachinaka-shi Ibaraki 312-8503 (JP); MATSUMOTO, Kazuya, Hitachinaka-shi Ibaraki 312-8503 (JP); KUDO, Atsushi, Hitachinaka-shi Ibaraki 312-8503 (JP); TAKAHASHI, Kenji, Hitachinaka-shi Ibaraki 312-8503 (JP)
(74) Representative: Weickmann & Weickmann PartmbB
(86) International application number: PCT/JP2023/003290
(87) International publication number: WO 2024/161567

(57) **Abstract**

A fiber-reinforced resin cylinder that prevents inclusion of resin particles and that can improve core removability is provided. A fiber-reinforced resin cylinder (2) is provided with a fiber-reinforced resin cylinder member (40), a metal cylinder member (50) secured to the inner circumferential surface at the axial end part (40b) of the fiber-reinforced resin cylinder member (40), wherein the inner diameter (D₅₁) of the metal cylinder member (50) is larger than the inner diameter (D₄₁) of the fiber-reinforced resin cylinder member (40).

## Description

### TECHNICAL FIELD

The present invention relates to a fiber-reinforced resin cylinder to be used as, for example, a power transmission shaft in a vehicle and the like, a manufacturing method for a fiber-reinforced resin cylinder, and a fiber-reinforced resin cylinder manufacturing jig.

### BACKGROUND ART

Patent Literature 1 discloses a technique in which in manufacturing a cylinder made of a fiber-reinforced resin, a metal cylinder member is disposed on an end portion of a mandrel, which serves as a base, and then, a fiber is wound around outer peripheral surfaces of the mandrel and the cylinder member, and subsequently, the mandrel and the cylinder member around which the fiber has been wound are disposed in a mold, and subsequently, the mold is filled with a resin to impregnate the fiber with the resin, followed by curing the resin to manufacture the cylinder.

### CITATION LIST

### Patent Literature

Patent Literature 1: JP6873369B1

### SUMMARY OF INVENTION

### Technical Problem

When a mold is filled with a resin, a part of the resin with which a fiber has not been impregnated flows between a fiber layer and a mandrel, and is solidified to form a part of a resin layer. Here, there is a case where a further part of the resin is solidified in a state of being away from the resin layer, and remains as resin residues between the resin layer and the mandrel. In addition, there is a case where if the resin enters between the metal cylinder member and the mandrel, this resin is solidified between the cylinder member and the mandrel between which a certain gap is provided, to become resin residues. Since such resin residues remain between the mandrel and the metal cylinder member and become friction elements, there is a possibility that a large load is required in the work of removing the mandrel (removing the core).

The present invention has been created in view of such circumstances, and an object thereof is to provide a fiber-reinforced resin cylinder, a method for manufacturing a fiber-reinforced resin cylinder, and a fiber-reinforced resin cylinder manufacturing jig which are capable of preventing the ? of resin residues and improving core removability.

### Solution to Problem

According to the present disclosure, a fiber-reinforced resin cylinder comprising: a fiber-reinforced resin cylinder member; and a metal cylinder member which is fixed to an inner peripheral surface of an end portion of the fiber-reinforced resin cylinder member, wherein an inner diameter of the metal cylinder member is larger than an inner diameter of the fiber-reinforced resin cylinder member is provided.

### Advantageous Effects of Invention

According to the present invention, since no sliding occurs between the outer peripheral surface of the mandrel and the inner peripheral surface of the metal cylinder member when the mandrel is removed from the fiber-reinforced resin cylinder, drag resistance due to resin residues can be reduced, and core removability is improved, so that a fiber-reinforced resin cylinder having improved manufacturability can be provided.

### BRIEF DESCRIPTION OF DRAWINGS

[FIG. 1]

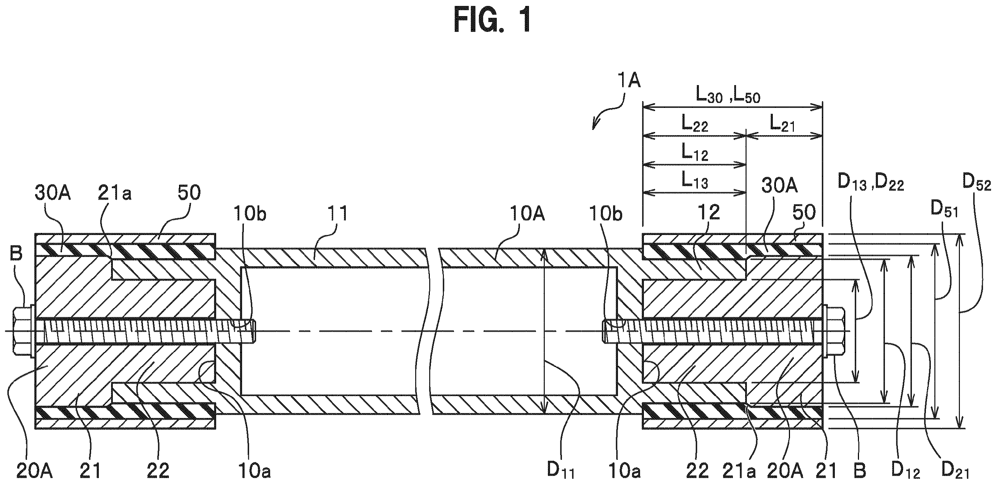

   FIG. 1 is a sectional view schematically showing a fiber-reinforced resin cylinder manufacturing jig according to a first embodiment of the present invention.
[FIG. 2]

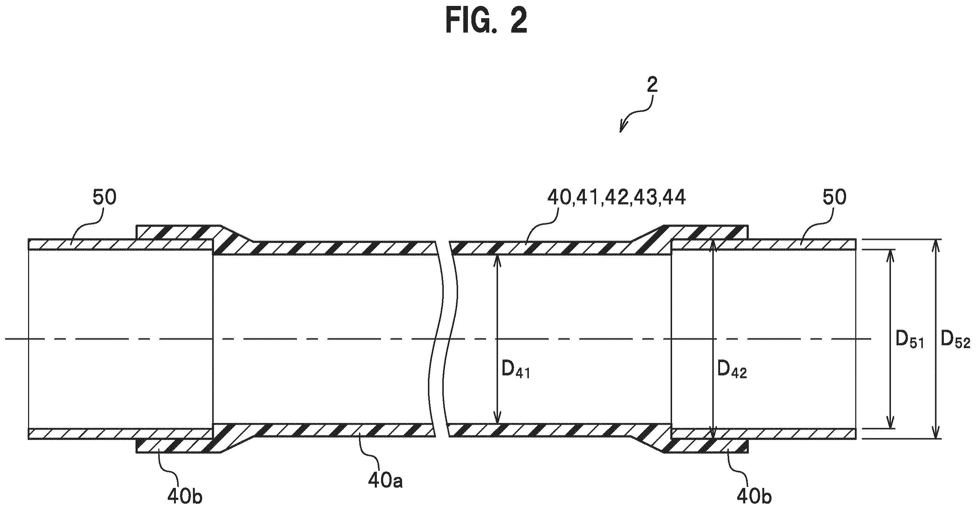

   FIG. 2 is a diagram schematically showing a fiber-reinforced resin cylinder manufactured by using the fiber-reinforced resin cylinder manufacturing jig according to the first embodiment of the present invention.
[FIG. 3]

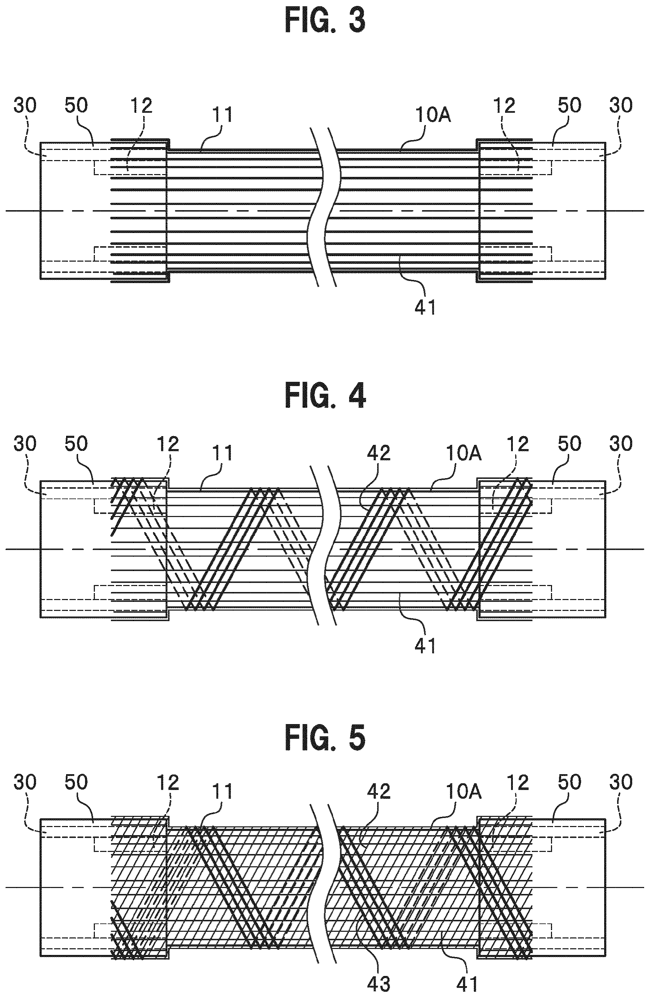

   FIG. 3 is a schematic diagram for explaining a manufacturing method for a fiber-reinforced resin cylinder according to the first embodiment of the present invention, and is a diagram schematically showing a first carbon fiber layer.
[FIG. 4]
   FIG. 4 is a schematic diagram for explaining the manufacturing method for a fiber-reinforced resin cylinder according to the first embodiment of the present invention, and is a diagram schematically showing a second carbon fiber layer.
[FIG. 5]
   FIG. 5 is a schematic diagram for explaining the manufacturing method for a fiber-reinforced resin cylinder according to the first embodiment of the present invention, and is a diagram schematically showing a third carbon fiber layer.
[FIG. 6]

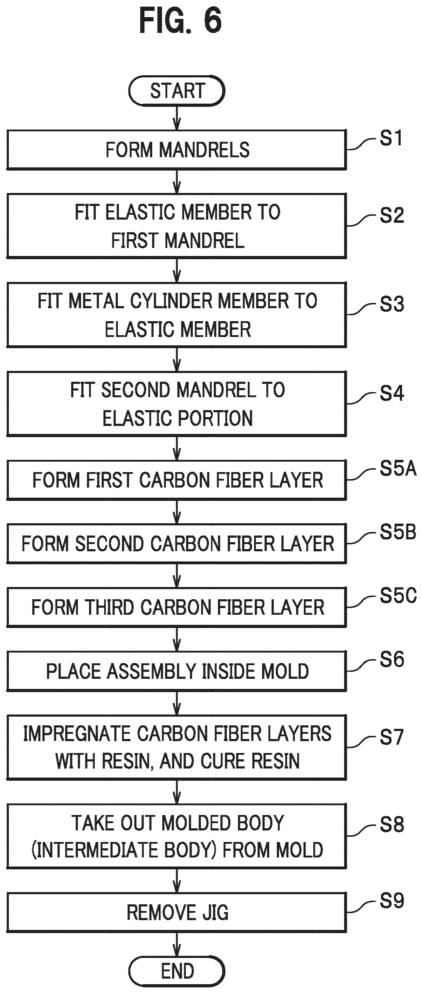

   FIG. 6 is a flowchart for explaining the manufacturing method for a fiber-reinforced resin cylinder according to the first embodiment of the present invention.
[FIG. 7]

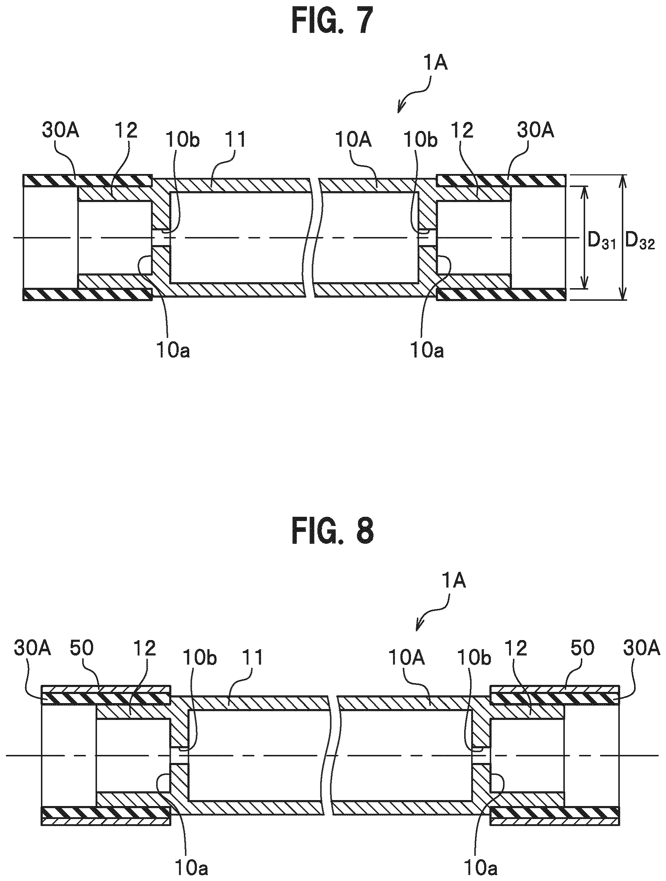

   FIG. 7 is a schematic diagram for explaining the manufacturing method for a fiber-reinforced resin cylinder according to the first embodiment of the present invention, and is a sectional view schematically showing a state where a first mandrel and an elastic member are assembled.
[FIG. 8]
   FIG. 8 is a schematic diagram for explaining the manufacturing method for a fiber-reinforced resin cylinder according to the first embodiment of the present invention, and is a sectional view schematically showing a state where the first mandrel, the elastic member, and a metal cylinder member are assembled.
[FIG. 9]

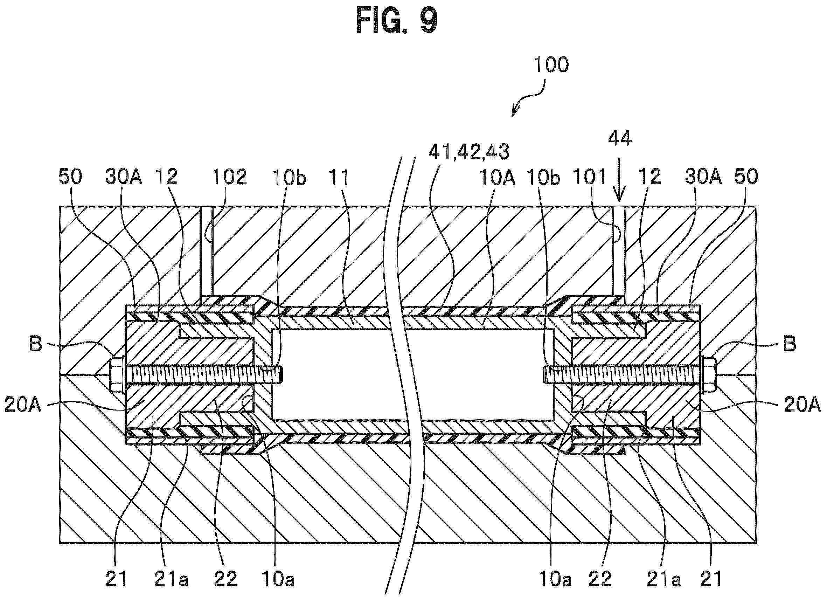

   FIG. 9 is a schematic diagram for explaining the manufacturing method for a fiber-reinforced resin cylinder according to the first embodiment of the present invention, and is a sectional view schematically showing a state where a jig in which a carbon fiber layer has been disposed is placed inside a molding apparatus.
[FIG. 10]

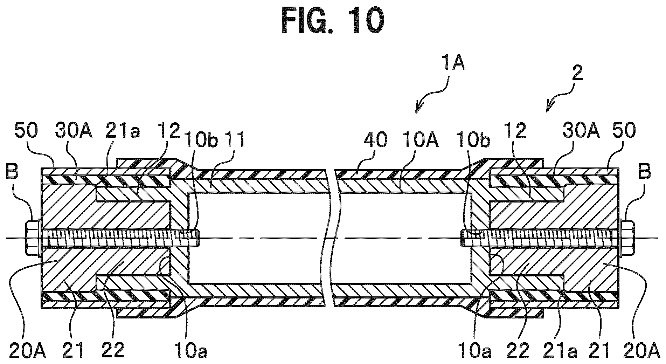

   FIG. 10 is a schematic diagram for explaining the manufacturing method for a fiber-reinforced resin cylinder according to the first embodiment of the present invention, and is a sectional view schematically showing an intermediate body taken out from the molding apparatus.
[FIG. 11]

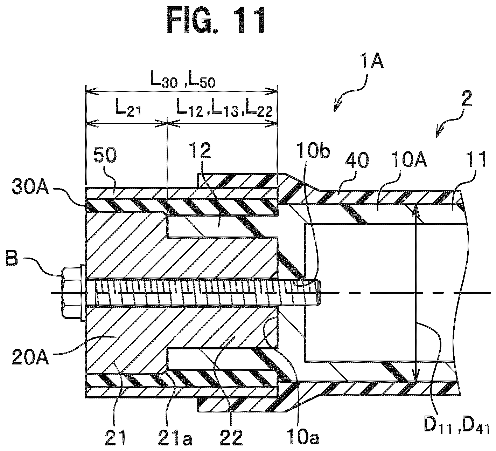

   FIG. 11 is a schematic diagram for explaining the manufacturing method for a fiber-reinforced resin cylinder according to the first embodiment of the present invention, and is a partially enlarged sectional view schematically showing the intermediate body taken out from the molding apparatus.
[FIG. 12]

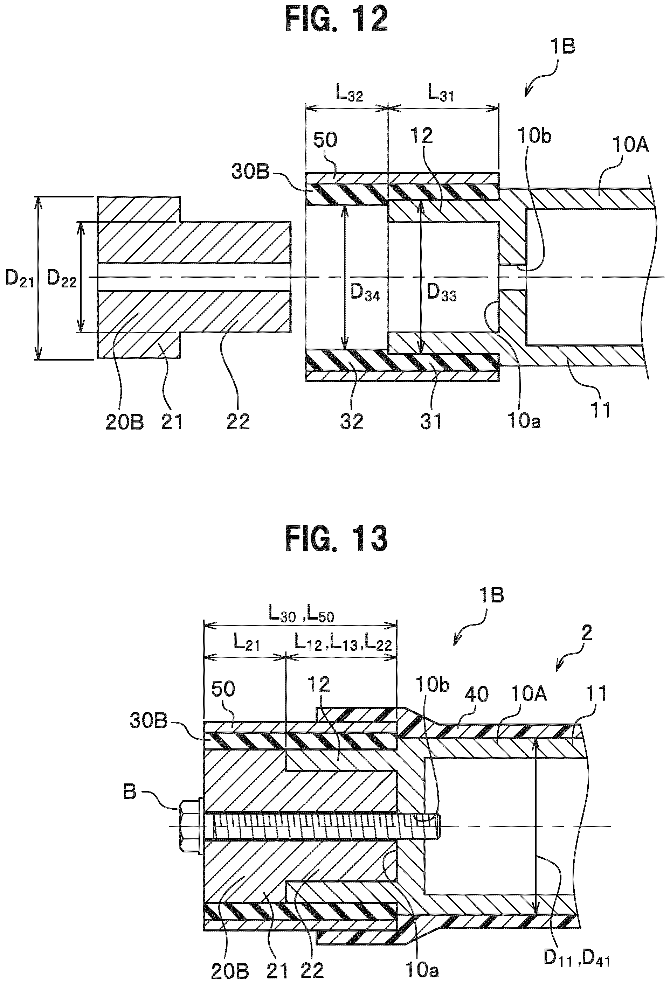

   FIG. 12 is a partially enlarged sectional view schematically showing a fiber-reinforced resin cylinder manufacturing jig according to a second embodiment of the present invention.
[FIG. 13]
   FIG. 13 is a partially enlarged sectional view schematically showing the fiber-reinforced resin cylinder manufacturing jig and a fiber-reinforced resin cylinder according to the second embodiment of the present invention.
[FIG. 14]

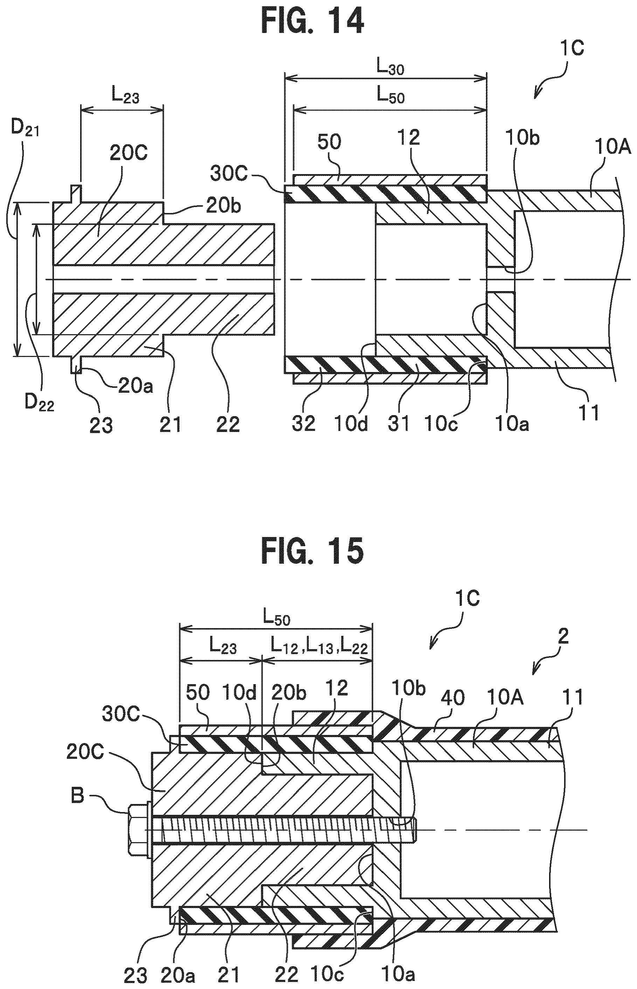

   FIG. 14 is a partially enlarged sectional view schematically showing a fiber-reinforced resin cylinder manufacturing jig according to a third embodiment of the present invention.
[FIG. 15]
   FIG. 15 is a partially enlarged sectional view schematically showing the fiber-reinforced resin cylinder manufacturing jig and a fiber-reinforced resin cylinder according to the third embodiment of the present invention.
[FIG. 16]

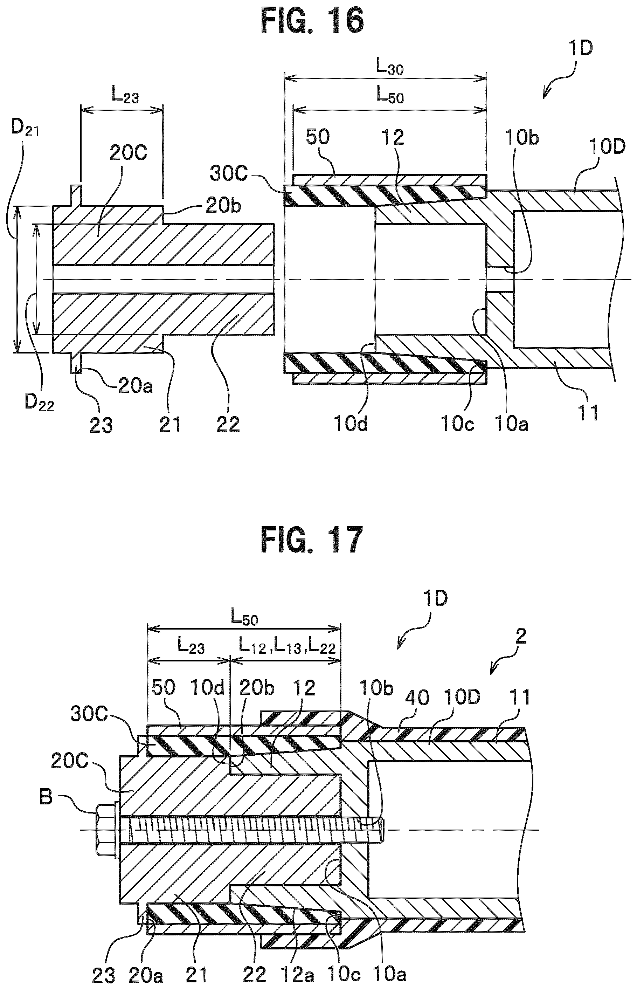

   FIG. 16 is a partially enlarged sectional view schematically showing a fiber-reinforced resin cylinder manufacturing jig according to a fourth embodiment of the present invention.
[FIG. 17]
   FIG. 17 is a partially enlarged sectional view schematically showing the fiber-reinforced resin cylinder manufacturing jig and a fiber-reinforced resin cylinder according to the fourth embodiment of the present invention.

### DESCRIPTION OF EMBODIMENTS

Embodiments of the present invention will be described in detail with reference to the drawings by giving the case of manufacturing a fiber-reinforced resin cylinder by using a carbon fiber-reinforced plastic, as examples. In the following description, the same elements are denoted by the same signs, and repetitive description will be omitted. In addition, the drawings to refer to are deformed for easiness in understanding.

### <First Embodiment>

As shown in FIG. 1, a fiber-reinforced resin cylinder manufacturing jig (hereinafter, simply referred to as "jig") 1A according to a first embodiment is used for manufacturing a fiber-reinforced resin cylinder 2 (see FIG. 2), and includes a first mandrel 10A, a pair of second mandrels 20A, 20A, and a pair of elastic members 30A, 30A.

### <<First Mandrel>>

The first mandrel 10A is a metal member taking a cylindrical shape (a substantially circular cylindrical shape in the present embodiment). In the present embodiment, the first mandrel 10A is removed from inside the fiber-reinforced resin cylinder 2. The first mandrel 10A integrally includes a first columnar portion (a large diameter portion) 11 in an axial middle portion, and second columnar portions (middle diameter portions) 12, 12 which are formed coaxially with the first columnar portion 11 in axial end portions. In an axial end portion of the second columnar portion 12, a recess portion 10a which is depressed in an axial direction is formed. The first mandrel 10A may be a resin member having certain heat resistance and hardness.

### <<Second Mandrel>>

The second mandrel 20A is a metal member taking a cylindrical shape (a substantially circular cylindrical shape in the present embodiment). The second mandrel 20A is disposed coaxially with the second columnar portion 12, and integrally includes a third columnar portion (a middle diameter portion) 21 which extends in a direction separating from the first columnar portion 11, and a fourth columnar portion 22 which extends from the third columnar portion 21 to the first mandrel 10A side coaxially with the third columnar portion 21. The second mandrel 20A may be a resin member having certain heat resistance and hardness. On an outer peripheral surface of the third columnar portion 21, in an end portion on the fourth columnar portion 22 side, a tapered portion 21a which is reduced in diameter as extending toward the fourth columnar portion 22 is formed.

An outer diameter D₂₁ of the third columnar portion 21 of the second mandrel 20A is larger than an outer diameter D₁₂ of the second columnar portion 12 of the first mandrel 10A. An outer diameter D₂₂ of the fourth columnar portion 22 of the second mandrel 20A is equal to an inner diameter D₁₃ of the recess portion 10a of the first mandrel 10A. An axial dimension L₂₂ of the fourth columnar portion 22 of the second mandrel 20A is equal to an axial dimension (depth) L₁₃ of the recess portion 10a of the first mandrel 10A. That is, in the state where the fourth columnar portion 22 of the second mandrel 20A is fitted to (fitted into) the recess portion 10a of the first mandrel 10A, the fourth columnar portion 22 of the second mandrel 20A and the second columnar portion 12 of the first mandrel 10A are disposed in such a manner as to be continuous with each other.

The first mandrel 10A and the second mandrel 20A are attachably and detachably fixed to each other by a bolt B. The bolt B is inserted through the first mandrel 10A and the second mandrel 20A from the second mandrel 20A side, and is screwed into a female thread portion 10b of the first mandrel 10A to fasten the first mandrel 10A and the second mandrel 20A. Note that the first mandrel 10A, the second mandrel 20A, and the second mandrel 20A may be fixed to one another by a method such as, for example, a snap ring other than the fastening with the bolt B.

### <<Elastic Member>>

The elastic member 30 is formed of an elastic material, and is a member taking a cylindrical shape (a circular cylindrical shape in the present embodiment) having a uniform inner diameter. In the present embodiment, the elastic member 30 is removed from inside the fiber-reinforced resin cylinder 2. The elastic member 30 is a member which achieves a function of fixing the position of a metal cylinder member 50 and a sealing property of preventing a resin 44 from entering the inner peripheral surface side of the metal cylinder member 50 in the stage of manufacturing the fiber-reinforced resin cylinder 2. In addition, the elastic member 30 is a member for providing a space to which resin residues are discharged when the first mandrel 10A is taken out from inside the fiber-reinforced resin cylinder 2. For the elastic member 30, a material which can withstand heating in curing the resin in the fiber-reinforced resin cylinder 2 can be used. Examples of such a material include NR (natural rubber), CR (chloroprene rubber), ethylene-propylene-diene rubber (EPDM), and the like.

An inner diameter D₃₁ of the elastic member 30A (see FIG. 7) is equal to the outer diameter D₁₂ of the second columnar portion 12, and is smaller than the outer diameter D₂₁ of the third columnar portion 21. By fitting the second mandrel 20A into the elastic member 30A, the elastic member 30A is held between the second mandrel 20A and the metal cylinder member 50, and is compressed in a radial direction, and the material flows to the first mandrel 10A side. An outer diameter D₃₂ of the elastic member 30 (see FIG. 7) is larger than an outer diameter D₁₁ of the first columnar portion 11. An axial dimension L₃₀ of the elastic member 30 is equal to a sum of an axial dimension L₁₂ of the second columnar portion 12 and an axial dimension L₂₁ of the third columnar portion 21. This elastic member 30A is fitted to (fitted onto) the second columnar portion 12 and the third columnar portion 21.

Note that the axial dimension L₃₀ of the elastic member 30A (and an axial dimension L₅₀ of a metal cylinder member 50 which will be described later) may be smaller than the sum of the axial dimension L₂₂ of the second columnar portion 12 and the axial dimension of the third columnar portion 21. In this case, an end portion of the third columnar portion 21 is exposed from the elastic member 30A and the metal cylinder member 50 in the axial direction, making it easy to take out the second mandrel 20A in step S9, which will be described later. Note that the relation of the axial dimension L₃₀ of the elastic member 30A with the axial dimensions of the other members is not limited to the above-described one.

### <Fiber-Reinforced Resin Cylinder>

As shown in FIG. 2, the fiber-reinforced resin cylinder 2 manufactured by using the jig 1A (see FIG. 1) is a cylinder which is applicable to, for example, a power transmission shaft (propeller shaft) for vehicles, a high-pressure tank, a shaft of a golf club, a fishing rod, and the like, and includes a fiber-reinforced resin cylinder member 40 and the pair of metal cylinder members 50, 50.

### <Fiber-Reinforced Resin Cylinder Member>

The fiber-reinforced resin cylinder member 40 is a fiber-reinforced resin layer (resin-containing fiber layer) formed in a cylindrical shape along the outer peripheral surface of the jig 1A. Axial end portions (portions to which the metal cylinder members 50 are fixed) of the fiber-reinforced resin cylinder member 40 are formed to have a diameter larger than that of an axial middle portion thereof. As shown in FIG. 3 to FIG. 5, the fiber-reinforced resin cylinder member 40 includes a first carbon fiber layer 41, a second carbon fiber layer 42, and a third carbon fiber layer 43 in the order from the inner side in the radial direction (to the jig 1A side) as carbon fiber layers. Carbon fibers (second carbon fibers) forming the second carbon fiber layer 42 and the third carbon fiber layer 43 have a larger strength and a smaller elasticity than those of carbon fibers (first carbon fibers) forming the first carbon fiber layer 41. Note that in FIG. 3 to FIG. 5, only parts of the carbon fiber layers 41, 42, 43 are shown. In addition, outer peripheral surfaces of parts of the metal cylinder member 50 (portions corresponding to both end portions of the jig 1A) are not covered with the fiber-reinforced resin cylinder member 40, and protrude from the fiber-reinforced resin cylinder member 40.

The fiber-reinforced resin cylinder member 40 integrally includes an axial middle portion 40a, and a pair of axial end portions 40b, 40b which extend from axial end portions of the axial middle portion 40a outward in the axial direction. An inner diameter D₄₂ of the axial end portions 40b is larger than an inner diameter D₄₁ of the axial middle portion 40a.

### <<First Carbon Fiber Layer>>

As shown in FIG. 3, the first carbon fiber layer 41 is formed of a plurality of carbon fibers provided on the outer peripheral surfaces of the first mandrel 10A and the like in such a manner as to cover the first mandrel 10A. More specifically, a carbon fiber assembly is formed by assembling a plurality of carbon fibers in a band shape or a bundle shape, and the first carbon fiber layer 41 is formed by providing a plurality of the carbon fiber assemblies while changing phases. The carbon fibers in the first carbon fiber layer 41 extend in parallel with the axial direction of the first mandrel 10A. That is, regarding the first carbon fiber layer 41, the angle of orientation of the carbon fibers to the axis of the first mandrel 10A is 0°.

### <<Second Carbon Fiber Layer>>

As shown in FIG. 4, the second carbon fiber layer 42 is provided on an outer side of the first carbon fiber layer 41 in the radial direction, and is formed of a plurality of carbon fibers provided in such a manner as to cover the first carbon fiber layer 41. More specifically, a carbon fiber assembly is formed by assembling a plurality of carbon fibers in a band shape or a bundle shape, and the second carbon fiber layer 42 is formed by providing a plurality of the carbon fiber assemblies while changing phases. The carbon fibers in the second carbon fiber layer 42 are wound by one or more rounds while being inclined to the axial direction of the first mandrel 10A by 45°, and extend in a spiral shape relative to the axial direction of the first mandrel 10A. That is, regarding the second carbon fiber layer 42, the angle of orientation of the carbon fibers to the axis of the first mandrel 10A is 45°.

### <<Third Carbon Fiber Layer>>

As shown in FIG. 5, the third carbon fiber layer 43 is provided on an outer side of the second carbon fiber layer 42 in the radial direction, and is formed of a plurality of carbon fibers provided in such a manner as to cover the second carbon fiber layer 42. More specifically, a carbon fiber assembly is formed by assembling a plurality of carbon fibers in a band shape or a bundle shape, and the third carbon fiber layer 43 is formed by providing a plurality of the carbon fiber assemblies while changing phases. The carbon fibers in the third carbon fiber layer 43 are wound by one or more rounds while being inclined to the axial direction of the first mandrel 10A by -45°, and extend in a spiral shape relative to the axial direction of the first mandrel 10A. That is, regarding the third carbon fiber layer 43, the angle of orientation of the carbon fibers to the axis of the first mandrel 10A is -45°.

### <<Metal Cylinder Member>>

The metal cylinder member 50 is a metal member taking a cylindrical shape (a circular cylindrical shape in the present embodiment). An axial one part of the metal cylinder member 50 is fixed to an inner peripheral surface of the axial end portion 40b of the fiber-reinforced resin cylinder member 40, and an axial other part protrudes from the fiber-reinforced resin cylinder member 40 in the axial direction.

An inner diameter D₅₁ of the metal cylinder member 50 is larger than the outer diameter D₁₁ of the first columnar portion 11 (that is, the inner diameter D₄₁ of the axial middle portion 40a of the fiber-reinforced resin cylinder member 40), and is slightly larger than the outer diameter (normal state) D₃₂ of the elastic member 30A (see FIG. 7) (the same applies to second, third, and fourth embodiments which will be described later). An axial dimension L₅₀ of the metal cylinder member 50 is equal to the axial dimension L₃₀ of the elastic member 30A. This metal cylinder member 50 is fitted to (fitted onto) the elastic member 30A in the course of the manufacture. Note that the relation of the axial dimension L₅₀ of the metal member 50 with the axial directions of the other members is not limited to the above-described one.

The metal cylinder member 50 is a member for attaching another metal member. For example, in the case where the fiber-reinforced resin cylinder 2 is used as a power transmission shaft (propeller shaft) of a vehicle, a universal joint (a yoke or a plunge joint shaft member) is joined to the metal cylinder member 50 by welding or the like.

### <Manufacturing Method>

Subsequently, a manufacturing method for a fiber-reinforced resin cylinder 2 using the jig 1A according to the first embodiment of the present invention will be described by using a flowchart of FIG. 6. The manufacturing method for a fiber-reinforced resin cylinder 2 includes a mandrel forming step (step S1), and an elastic member fitting step (step S2) which is executed after the mandrel forming step. In addition, the manufacturing method for a fiber-reinforced resin cylinder 2 includes a metal cylinder member fitting step (step S3) which is executed after the elastic member fitting step, and a second mandrel fitting step (step S4) which is executed after the metal cylinder member fitting step. In addition, the manufacturing method for a fiber-reinforced resin cylinder 2 includes a fiber placing step (step S5A to S5C) which is executed after the second mandrel fitting step, and an intra-mold placing step (step S6) which is executed after the fiber placing step. In addition, the manufacturing method for a fiber-reinforced resin cylinder 2 includes a molding step (step S7) which is executed after the intra-mold placing step, a taking-out step (step S8) which is executed after the molding step, and a jig removing step (step S9) which is executed after the taking-out step.

Step S1 is a step of forming the resin first mandrel 10A and the second mandrels 20A shown in FIG. 1 by using a molding apparatus which is not shown.

Following step S1, in step S2, the first mandrel 10A and a pair of elastic members 30, 30 are fitted to each other as shown in FIG. 7. In the present embodiment, axial one parts of the elastic members 30A are fitted onto the second columnar portions 12.

Following step S2, in step S3, the elastic members 30 and the metal cylinder members 50 are fitted to each other as shown in FIG. 8. In the present embodiment, the metal cylinder members 50 are fitted onto the elastic members 30A.

Following step S3, in step S4, the second mandrels 20A and the axial other parts of the first mandrel 10A and the elastic members 30A are fitted to each other as shown in FIG. 1. In the present embodiment, the fourth columnar portions 22 are fitted into the recess portions 10a, and the third columnar portions 21 are fitted into the axial other parts of the elastic members 30A. Here, the second mandrels 20A are fitted into the elastic members 30A until the second mandrels 20A come into contact with the first mandrel 10A while compressing the elastic members 30A in the radial direction by an axial force generated by tightening the bolts B. Then, the axial other parts of the elastic members 30A are compressed and deformed in the radial direction by being held by the third columnar portions 21 and the metal cylinder members 50. The elastic members 30A thus compressed and deformed flow to between the second columnar portions 12 and the metal cylinder members 50, which are not compressed, and can fill a slight gap generated between the outer peripheral surface of the elastic members 30A and the metal cylinder members 50, and a slight gap generated between the elastic members 30A and the second columnar portions 12.

Following step S4, in step S5A, the first carbon fiber layer 41 is formed on the outer peripheral surfaces of the first columnar portion 11 of the first mandrel 10A and the metal cylinder members 50, 50 as shown in FIG. 3. Following step S5A, in step S5B, the second carbon fiber layer 42 is formed on the outer peripheral surface of the first carbon fiber layer 41 on the first columnar portion 11 of the first mandrel 10A and the metal cylinder members 50, 50 as shown in FIG. 4. Following step S5B, in step S5C, the third carbon fiber layer 43 is formed on the outer peripheral surface of the second carbon fiber layer 42 on the first columnar portion 11 of the first mandrel 10A and the metal cylinder members 50, 50 as shown in FIG. 5. In steps S5A to S5C, the carbon fiber layers 41 to 43 are formed such that the fibers thereof are not disposed on the end portions of the metal cylinder members 50 which are located on the opposite sides to the first columnar portion 11 in the axial direction.

In steps S5A to S5C, the carbon fiber layers 41 to 43 are not fibers impregnated with the resin, but so-called filamentous yarns. In addition, the carbon fiber layers 41 to 43 are disposed concurrently on the outer peripheral surfaces of the first columnar portion 11 of the first mandrel 10A and the metal cylinder members 50, 50 by the multiple filament winding (MFW) method. The carbon fiber layers 41 to 43 fed by the multiple filament winding method take a so-called non-crimp structure in which the layers are independent from one another without being woven with one another.

In steps S5A to S5C, the carbon fiber layers 41 to 43 are disposed on the outer peripheral surfaces of the first mandrel 10A and the like by an apparatus which is not shown. This device can set and change the angles of orientation of the carbon fiber layers 41 to 43 as appropriate. Note that the carbon fiber layers 41 to 43 may be configured to be disposed to form an integral cylindrical shape by the aforementioned device, and then disposed on the outer peripheral surfaces of the first mandrel 10A and the like.

In the (single) filament winding method, a fiber layer is formed by disposing jigs each having a plurality of radially extending pins on both end portions of a mandrel, and repeatedly winding a single carbon fiber on an outer peripheral surface of the mandrel in the state where the carbon fiber is locked on the pins. For this reason, in the (single) filament winding method, there is a possibility that the carbon fiber layer 41, for which the fibers are not wound around the first mandrel 10A and the like and need to be disposed to be wound by less than one round, cannot be favorably held on the outer peripheral surfaces of the first mandrel 10A and the like.

In contrast, in the multiple filament winding method, in the state where the carbon fiber layers 41 to 43 are disposed such that cylindrical layers are formed of a plurality of carbon fibers, the jig 1A and the metal cylinder member 50 are inserted through the cylindrical layers (or the cylindrical layers are fitted onto the jig 1A and the metal cylinder member 50). In addition, in the multiple filament winding method, the carbon fiber layers 41 to 43 can be formed concurrently. Hence, in the multiple filament winding method, the carbon fiber layer 41, which is not wound around the first mandrel 10A and the like and needs to be disposed to be wound by less than one round, can be favorably held on the outer peripheral surfaces of the first mandrel 10A and the like with the carbon fiber layers 42, 43 located on the outer side in the radial direction.

Following step S5C, in step S6, the assembly of the jig 1A and the carbon fiber layers 41 to 43 is placed inside a molding apparatus 100 (mold) (see FIG. 9).

Following step S6, in step S7, the resin 44 is supplied to the inside of the molding apparatus 100 as shown in FIG. 9. In this way, the carbon fiber layers 41 to 43 disposed on the outer peripheral surfaces of the jig 1A and the metal cylinder members 50, 50 are impregnated with the resin 44. Moreover, the resin 44 is cured by applying heat to the molding apparatus 100, so that the fiber-reinforced resin cylinder member 40 is formed and the fiber-reinforced resin cylinder member 40 and the metal cylinder members 50, 50 are integrally molded by the so-called RTM (Resin Transfer Molding) method (step S7, the molding step). The resin 44 is, for example, a thermosetting resin. In the present embodiment, the mold of the molding apparatus 100 is divided into a plurality of pieces. In step S7, heat is applied to the assembly, and a mold-closing operation of closing the mold of the molding apparatus 100 is conducted. Subsequently, a mold-tightening operation of applying pressure to the closed mold is conducted to increase the pressure inside the mold, thereby prompting the curing of the resin 44. Note that in the present embodiment, since the configuration in which the mold is divided into a plurality of pieces is described, the mold-closing operation and the mold-tightening operation are conducted; however, the mold-tightening operation is not essential. In addition, in the case where the mold is not divided into a plurality of pieces, the mold-closing operation and the mold-tightening operation are not essential. In the molding apparatus 100, a space (resin reservoir) may be formed on the outlet side of the gate 101 into which the resin 44 in a molten state is introduced. The resin 44 introduced into the molding apparatus 100 is reserved in this resin reservoir which is located on a side of the first end portion of the carbon fiber layers 41 to 43. The resin 44 reserved in the resin reservoir is moved in the axial direction of the jig 1A by vacuum suction from a suction port 102 which is formed on the opposite side to the gate 101 (on the outer peripheral surface side of the second end portion of the carbon fiber layers 41 to 43) in the alignment direction of the carbon fiber layers 41 to 43, and the carbon fiber layers 41 to 43 are impregnated with the resin 44. In the state where the carbon fiber layers 41 to 43 are impregnated with the resin 44, heat is applied to the molding apparatus 100, and further, pressure is applied to the inside of the molding apparatus 100, so that the fiber-reinforced resin cylinder member 40 is formed.

Following step S7, in step S8, the molded body, that is, an intermediate body is taken out from the molding apparatus 100 (see FIG. 10 and FIG. 11).

Following step S8, in step S9, the jig removing step is executed as shown from FIG. 10 to FIG. 2. This jig removing step is an example of a separating step of separating the fiber-reinforced resin cylinder 2 and the jig 1A from each other, and is a step of taking out the jig 1A from an opening side of an end portion of the metal cylinder member 50 to an outside of the fiber-reinforced resin cylinder member 40. In this way, a reduction in weight of the fiber-reinforced resin cylinder 2 is achieved.

The jig 1A is removed in the following order: the second mandrels 20A, the elastic members 30A, and the first mandrel 10A. According to this jig removing step, the entering of the resin 44 onto the inner peripheral surface of the metal cylinder members 50 is suppressed, and the generation of resin residues on the inner peripheral surface of the metal cylinder members 50 is suppressed. In addition, since the space into which resin residues (contaminant) generated between the first columnar portion 11 and the fiber-reinforced cylinder member 50 at the time of removing the first mandrel 10A are discharged is provided by removing the elastic members 30, the workability of removing the jig 1A (removing the core) can be improved.

The fiber-reinforced resin cylinder 2 according to the first embodiment of the present invention includes: the fiber-reinforced resin cylinder member 40; and the metal cylinder member 50 which is fixed to the inner peripheral surface of the end portion (axial end portion 40b) of the fiber-reinforced resin cylinder member 40, wherein the inner diameter D₅₁ of the metal cylinder member 50 is larger than the inner diameter D₄₁ of the fiber-reinforced resin cylinder member 40.

Therefore, the fiber-reinforced resin cylinder 2 can prevent the ? of resin residues and improve the core removability.

In the fiber-reinforced resin cylinder 2, the fiber-reinforced resin cylinder member 40 is molded integrally on the metal cylinder member 50 by an MFW method and an RTM method.

Therefore, the fiber-reinforced resin cylinder 2 can solve a problem particular to the MFW method and the RTM method, and can be stably mass-produced.

In addition, the manufacturing method for the fiber-reinforced resin cylinder 2 according to the first embodiment of the present invention includes the steps of: fitting the second columnar portion 12 of the first mandrel 10A and a part of the cylindrical elastic member 30A to each other (step S2), the first mandrel 10A having the first columnar portion 11 and the second columnar portion 12 which extends from the end portion of the first columnar portion 11 in the axial direction and has a diameter smaller than that of the first columnar portion 11; fitting the elastic member 30A and the metal cylinder member 50 to each other such that the metal cylinder member 50 is located on the outer side in the radial direction (step S3); fitting another part of the elastic member 30A and the columnar second mandrel 20A to each other (step S4); forming the fiber-reinforced resin cylinder member 40 on outer peripheral surfaces of the first mandrel 10A and the metal cylinder member 50 (steps S5A, S5B, S5C, S6, S7); and separating the first mandrel 10A, the elastic member 30A, and the second mandrel 20A from the fiber-reinforced resin cylinder member 40 and the metal cylinder member 50 (step S9).

Therefore, according to the manufacturing method for the fiber-reinforced resin cylinder 2, the ? of resin residues can be prevented, and the core removability, in turn, the productivity of the fiber-reinforced resin cylinder 2 can be improved.

In addition, the fiber-reinforced resin cylinder manufacturing jig 1A according to the first embodiment of the present invention includes: the first mandrel 10A which includes the first columnar portion 11 having the outer peripheral surface on which a fiber is disposed, and the second columnar portion 12 extending from the end portion of the first columnar portion 11 in the axial direction and having a diameter smaller than that of the first columnar portion 11; the second mandrel 20A which is disposed coaxially with the second columnar portion 12 and has the third columnar portion 21 extending in a direction separating from the first columnar portion 11; and the cylindrical elastic member 30A which is fitted to the second columnar portion 12 and the third columnar portion 21 and has an outer diameter larger than the outer diameter of the first columnar portion 11.

Therefore, in manufacturing the fiber-reinforced resin cylinder 2 in which the fiber-reinforced resin cylinder member 40 and the metal cylinder member 50 are integrated, the fiber-reinforced resin cylinder manufacturing jig 1A can prevent the ? of resin residues, and improve the core removability, in turn, the productivity of the fiber-reinforced resin cylinder 2.

In the fiber-reinforced resin cylinder manufacturing jig 1A, the second mandrel 20A has the outer diameter D₂₂ larger than the inner diameter of the elastic member 30.

According to this fiber-reinforced resin cylinder manufacturing jig 1A, the elastic member 30A held and compressed between the third columnar portion 21 and the metal cylinder member 50 is compressed, and is deformed such that the elastic member 30A flows to between the second columnar portion 12 and the metal cylinder member 50. Then, a slight gap generated between the second columnar portion 12 and the elastic member 30A, and a slight gap generated between the metal cylinder member 50 and the elastic member 30A can be reduced.

Therefore, the fiber-reinforced resin cylinder manufacturing jig 1A can suppress the entering of the resin 44 between the elastic member 30A and another member, and improve the core removability, in turn, the productivity of the fiber-reinforced resin cylinder 2.

In the fiber-reinforced resin cylinder manufacturing jig 1A, in the outer peripheral surface of the third columnar portion 21, the end portion on the second columnar portion 12 side includes a tapered surface (tapered portion 21a) which is reduced in diameter as extending toward the second columnar portion 12.

According to this fiber-reinforced resin cylinder manufacturing jig 1A, the elastic member 30A held and compressed between the third columnar portion 21 and the metal cylinder member 50 is prompted to be deformed to be directed to the second columnar portion 12 by the tapered portion 21a, so that a slight gap generated between the second columnar portion 12 and the elastic member 30A, and a slight gap generated between the metal cylinder member 50 and the elastic member 30A can be reduced.

Therefore, the fiber-reinforced resin cylinder manufacturing jig 1A can suppress the entering of the resin 44 between the elastic member 30A and another member, and improve a reduction in the core removability, in turn, the productivity of the fiber-reinforced resin cylinder 2.

In the fiber-reinforced resin cylinder manufacturing jig 1A, one of the first mandrel 10A and the second mandrel 20A (the second mandrel 20A in the present embodiment) has the fourth columnar portion 22 which is inserted through the recess portion 10a formed on the other of the first mandrel 10A and the second mandrel 20A (the first mandrel 10A in the present embodiment).

Therefore, the fiber-reinforced resin cylinder manufacturing jig 1A can achieve equalization of the compression of the elastic member 40 in the circumferential direction by allowing the center axes of the first mandrel 10A and the second mandrel 20A to be correctly aligned.

### <Second Embodiment>

Subsequently, a jig according to a second embodiment of the present invention will be described mainly in terms of differences from the jig 1A according to the first embodiment.

As shown in FIG. 12 and FIG. 13, a jig 1B according to the second embodiment of the present invention includes a second mandrel 20B and an elastic member 30B in place of the second mandrel 20A and the elastic member 30A.

### <<Second Mandrel>>

The second mandrel 20B does not have the tapered portion 21a. In the second mandrel 20B, an outer diameter D₂₁ of a third columnar portion 21 is equal to an outer diameter D₁₂ of a second columnar portion 12.

### <<Elastic Member>>

The elastic member 30B has a step shape in an inner peripheral surface thereof, and integrally includes: a thin portion 31 which is an axial one part capable of fitting to the second columnar portion 12; and a thick portion 32 which is an axial other part capable of fitting to the third columnar portion 21. An inner diameter D₃₃ of the thin portion 31 is equal to the outer diameter D₁₂ of the second columnar portion 12, and an inner diameter D₃₄ of the thick portion 32 is smaller than the outer diameter D₂₁ of the third columnar portion 21.

In the fiber-reinforced resin cylinder manufacturing jig 1B according to the second embodiment of the present invention, the outer diameter of the third columnar portion 21 is larger than the inner diameter of the elastic member 30B.

Therefore, the fiber-reinforced resin cylinder manufacturing jig 1B can favorably compress the elastic member 30B in the same manner as the above-described elastic member 30A, and can favorably prevent the entering of the resin 44 to the inner peripheral surface side of the metal cylinder member 50.

### <Third Embodiment>

Subsequently, a jig according to a third embodiment of the present invention will be described mainly in terms of differences from the jig 1A according to the first embodiment.

As shown in FIG. 14 and FIG. 15, a jig 1C according to the third embodiment of the present invention includes a second mandrel 20C and an elastic member 30C in place of the second mandrel 20A and the elastic member 30A.

### <<Second Mandrel>>

The second mandrel 20C does not have the tapered portion 21a. In the second mandrel 20C, an outer diameter D₂₁ of a third columnar portion 21 is equal to an outer diameter D₁₂ of a second columnar portion 12. In addition, the second mandrel 20C is set such that an axial dimension of the third columnar portion 21 is larger than that in the first embodiment, and includes a flange portion 23 which protrudes outward from the third columnar portion 21 in a radial direction.

### <<Elastic Member>>

The elastic member 30C is held by a first end surface 10c formed in a boundary between a first columnar portion 11 and a second columnar portion 12 and a second end surface 20a formed in the flange portion 23.

An axial dimension (normal state) L₃₀ of the elastic member 30C is slightly larger than a sum of a distance between a first end surface 10b and the second end surface 20a, that is, an axial dimension L₁₂ of the second columnar portion 12 (a distance between a first end surface 10c and an end surface 10d of the second columnar portion 12) and an axial dimension L₂₁ of the third columnar portion 21 (a distance between the second end surface 20a and an end surface formed in the boundary between the third columnar portion 21 and the fourth columnar portion 22 in an axial direction). That is, the elastic member 30C is held by the first end surface 10b and the second end surface 20a to be compressed and deformed in the axial direction.

In the fiber-reinforced resin cylinder manufacturing jig 1C according to the third embodiment of the present invention, the second mandrel 20C has a second end surface 20a which holds the elastic member 30C in cooperation with a first end surface 10c formed in a boundary between the first columnar portion 11 and the second columnar portion 12.

Therefore, the fiber-reinforced resin cylinder manufacturing jig 1C can reduce a slight gap generated between the metal cylinder member 50 and the elastic member 30 and a slight gap between the mandrel 10C and the elastic member 30C by compressing the elastic member 30C in the axial direction to deform the elastic member 30C in the radial direction, and thus can more favorably prevent the entering of the resin 44 into these gaps.

### <Fourth Embodiment>

Subsequently, a jig according to a fourth embodiment of the present invention will be described mainly in terms of differences from the jig 1C according to the third embodiment.

As shown in FIG. 16 and FIG. 17, a jig 1D according to the third embodiment of the present invention includes a first mandrel 10D in place of the first mandrel 10A. In the first mandrel 10D, an outer peripheral surface of a second columnar portion 12 (at least an end portion on the third columnar portion 21 side, the entire outer peripheral surface in the axial direction in the present embodiment) includes a tapered surface (tapered portion 12a) which is reduced in diameter as extending toward the third columnar portion 21.

In the fiber-reinforced resin cylinder manufacturing jig 1D according to the fourth embodiment of the present invention, in an outer peripheral surface of the second columnar portion 12, an end portion on the third columnar portion 21 side includes a tapered surface (tapered portion 12a) which is reduced in diameter as extending toward the third columnar portion 21.

According to this fiber-reinforced resin cylinder manufacturing jig 1D, the elastic member 30C compressed in the axial direction by the second end surface 20a provided in the second mandrel 20C is further compressed by the tapered surface, so that a slight gap generated between the elastic member 30C and the second columnar portion 12, and a slight gap generated between the elastic member 30C and the metal cylinder 50 are reduced, thus suppressing the entering of the resin 44 into these gaps.

Therefore, the fiber-reinforced resin cylinder manufacturing jig 1D can prevent the generation and the entrapment of resin residues, and make it easy to remove the first mandrel 10D from the fiber-reinforced resin cylinder 2.

Although the embodiments of the present invention have been described above, the present invention is not limited to the above-described embodiments, and can be modified as appropriate without departing from the gist of the present invention. For example, the carbon fiber layers 41 to 43 may take a so-called crimp structure in which the layers are woven with one another. In addition, as a modification, the fibers are not limited to carbon fibers, and only have to be a fiber members capable of reinforcing resin layers (for example, glass fibers, cellulose fibers, or the like). In addition, the fourth columnar portion may be provided on the first mandrel 10A, 10D side and the recess portion may be provided on the second mandrel 20A, 20B, 20C side. In addition, the metal cylinder member 50 may be configured to be fixed to only one axial end portion 30b of the fiber-reinforced resin cylinder member 40. In this case, a metal columnar member may be fixed to the other axial end portion (having the same inner diameter and outer diameter as those of the axial middle portion 30a). In addition, it is possible to combine the first to fourth embodiments as appropriate.

### Reference Signs List

1 fiber-reinforced resin cylinder manufacturing jig
2 fiber-reinforced resin cylinder
10A, 10D first mandrel
10a recess portion
11 first columnar portion
12 second columnar portion
20A, 20B, 20C second mandrel
21 third columnar portion
22 fourth columnar portion
30A, 30B, 30C elastic member
40 fiber-reinforced resin cylinder member
50 metal cylinder member

## Claims

1. A fiber-reinforced resin cylinder comprising:
a fiber-reinforced resin cylinder member; and
a metal cylinder member which is fixed to an inner peripheral surface of an end portion of the fiber-reinforced resin cylinder member, wherein
an inner diameter of the metal cylinder member is larger than an inner diameter of the fiber-reinforced resin cylinder member.

2. The fiber-reinforced resin cylinder according to claim 1, wherein
the fiber-reinforced resin cylinder member is molded integrally on the metal cylinder member by an MFW method and an RTM method.

3. A method for manufacturing a fiber-reinforced resin cylinder comprising the steps of:
fitting a second columnar portion of a first mandrel and a part of a cylindrical elastic member to each other, the first mandrel having a first columnar portion and the second columnar portion which extends from an end portion of the first columnar portion in an axial direction and has a diameter smaller than that of the first columnar portion;
fitting the elastic member and a metal cylinder member to each other such that the metal cylinder member is located on an outer side in a radial direction;
fitting another part of the elastic member and a columnar second mandrel to each other;
forming a fiber-reinforced resin cylinder member on outer peripheral surfaces of the first mandrel and the metal cylinder member; and
separating the first mandrel, the elastic member, and the second mandrel from the fiber-reinforced resin cylinder member and the metal cylinder member.

4. A fiber-reinforced resin cylinder manufacturing jig comprising:
a first mandrel which includes
a first columnar portion having an outer peripheral surface on which a fiber is disposed, and
a second columnar portion extending from an end portion of the first columnar portion in an axial direction and having a diameter smaller than that of the first columnar portion;
a second mandrel which is disposed coaxially with the second columnar portion and has a third columnar portion extending in a direction separating from the first columnar portion; and
a cylindrical elastic member which is fitted to the second columnar portion and the third columnar portion and has an outer diameter larger than an outer diameter of the first columnar portion.

5. The fiber-reinforced resin cylinder manufacturing jig according to claim 4, wherein
an outer diameter of the third columnar portion is larger than an inner diameter of the elastic member.

6. The fiber-reinforced resin cylinder manufacturing jig according to claim 4, wherein
the second mandrel has a second end surface which holds the elastic member in cooperation with a first end surface formed in a boundary between the first columnar portion and the second columnar portion.

7. The fiber-reinforced resin cylinder manufacturing jig according to claim 5, wherein
in an outer peripheral surface of the third columnar portion, an end portion on the second columnar portion side includes a tapered surface which is reduced in diameter as extending toward the second columnar portion.

8. The fiber-reinforced resin cylinder manufacturing jig according to any one of claims 4 to 7, wherein
one of the first mandrel and the second mandrel has a fourth columnar portion which is inserted through a recess portion formed on the other of the first mandrel and the second mandrel.

## Amended claims

### Amended claims under Art. 19.1 PCT

1. (Cancelled).

2. (Cancelled).

3. A method for manufacturing a fiber-reinforced resin cylinder comprising the steps of:
fitting a second columnar portion of a first mandrel and a part of a cylindrical elastic member to each other, the first mandrel having a first columnar portion and the second columnar portion which extends from an end portion of the first columnar portion in an axial direction and has a diameter smaller than that of the first columnar portion;
fitting the elastic member and a metal cylinder member to each other such that the metal cylinder member is located on an outer side in a radial direction;
fitting another part of the elastic member and a columnar second mandrel to each other;
forming a fiber-reinforced resin cylinder member on outer peripheral surfaces of the first mandrel and the metal cylinder member; and
separating the first mandrel, the elastic member, and the second mandrel from the fiber-reinforced resin cylinder member and the metal cylinder member.

4. A fiber-reinforced resin cylinder manufacturing jig comprising:
a first mandrel which includes
a first columnar portion having an outer peripheral surface on which a fiber is disposed, and
a second columnar portion extending from an end portion of the first columnar portion in an axial direction and having a diameter smaller than that of the first columnar portion;
a second mandrel which is disposed coaxially with the second columnar portion and has a third columnar portion extending in a direction separating from the first columnar portion; and
a cylindrical elastic member which is fitted to the second columnar portion and the third columnar portion and has an outer diameter larger than an outer diameter of the first columnar portion.

5. The fiber-reinforced resin cylinder manufacturing jig according to claim 4, wherein
an outer diameter of the third columnar portion is larger than an inner diameter of the elastic member.

6. The fiber-reinforced resin cylinder manufacturing jig according to claim 4, wherein
the second mandrel has a second end surface which holds the elastic member in cooperation with a first end surface formed in a boundary between the first columnar portion and the second columnar portion.

7. The fiber-reinforced resin cylinder manufacturing jig according to claim 5, wherein
in an outer peripheral surface of the third columnar portion, an end portion on the second columnar portion side includes a tapered surface which is reduced in diameter as extending toward the second columnar portion.

8. The fiber-reinforced resin cylinder manufacturing jig according to any one of claims 4 to 7, wherein
one of the first mandrel and the second mandrel has a fourth columnar portion which is inserted through a recess portion formed on the other of the first mandrel and the second mandrel.

Statement under Art. 19.1 PCT

Amendments
   Claims 1 and 2 have been deleted.
Explanation

As indicated in the international search report, it is considered that the inventions according to claims 3-8 are novel and involve an inventive step.
